# EUROPEAN PATENT SPECIFICATION

(11) **EP 4 454 090 B1**
(45) Date of publication and mention of the grant of the patent: **24.06.2026**
(21) Application number: 23702501.0
(22) Date of filing: 03.02.2023
(51) Int. Cl.: H02J 3/00, H02J 3/38, H02J 3/48

(54) **METHOD OF POWER MANAGEMENT OF A POWER PLANT**
VERFAHREN ZUR LEISTUNGSSTEUERUNG EINES KRAFTWERKS
PROCÉDÉ DE GESTION D'ÉNERGIE D'UNE CENTRALE ÉLECTRIQUE

(30) Priority: 18.02.2022 EP 22382140
(43) Date of publication of application: 30.10.2024
(73) Proprietor: Siemens Gamesa Renewable Energy Innovation & Technology S.L., 31621 Sarriguren (Navarra) (ES)
(72) Inventor: BARRENECHEA GRUBER, Roberto Carlos, 28039 Madrid (ES); ENDEMANO VENTURA, Lázaro, 31180 Zizur Mayor (ES); ERICE CARBONERO, Victor, 31007 Navarra (ES); ROJO OCHOA, Raquel, 31600 Burlada Navarra (ES); ZUDAIRE LATIENDA, Pedro Maria, 31171 Ororbia (ES)
(74) Representative: SGRE-Association
(86) International application number: PCT/EP2023/052714
(87) International publication number: WO 2023/156224

(56) References cited:
- EP-A1- 3 823 125
- US-A1- 2020 259 358

## Description

### Field of invention

The present invention relates to a method of power management for a power plant comprising at least one type of renewable energy generation equipment and an energy storage system.

### Art Background

Power plants comprising renewable energy generation equipment and an energy storage system are often controlled by a power management system which determines, on the basis of some forecast parameters, an optimized power injection schedule that can be offered to an electrical grid, to which the power plant is connected to, in a predefined time range. The energy management system transmits to a grid controller of the electrical grid (controller or operator of the grid) the power injection schedule from its generation and storage resources, which has been determined, and then receives from the grid controller a committed power injection schedule. This committed power injection schedule represents an obligation for the power plant to deliver or supply the committed power during the predefined time range to the electrical grid. In co-located configurations, even if ultimately connected to the grid at the same point or not, the power injection schedules are defined separately for the generation and the storage resources at its own specific point of connection. In this type of hybrid configuration, the storage resource's power injection schedule represents a commitment negotiated in the energy markets, and its power injection or charging from the grid should not be lower and/or higher than the values in the committed schedule. On the other hand, the power injection from the generation resources into the grid shall be calculated and transmitted to the grid and/or market operator, however generally this schedule has an informative purpose and the power injection is not usually physically bounded to this schedule.

The generation of electrical power by means of renewable energy generation devices lacks however predictability and dis-patchability in the energy supply from renewable sources, for which reason renewable power plants present challenges for incorporation in the electrical grids and markets in the same way as traditional power plants are.

The inclusion of energy storage systems and the use of forecasts parameters to predict the power injection of the power plant into the grid has somehow alleviated the above mentioned problems.

When energy storage systems are used, power management methods known from the prior art provide a constant control of the battery which is then cycled in short, but fast, charging and discharging cycles, which allow the storage resource of the power plant to deliver the committed power injection schedule. This cycling, however, has a negative influence over the lifetime of the energy storage system.

There may be a need for improving the lifetime of the energy storage system by means of a novel method of power management of a power plant, while being able to reliably calculate, offer, commit and ultimately deliver and/or absorb a predetermined power supply schedule to/from the electrical grid by the storage resource, while recalculating the expected power injection from the generation resource, with the purpose of increasing the overall plant's profitability. Document EP 3 823 125 A1 is an example of prior art document.

### Summary of the Invention

This need may be met by the subject matter according to the independent claims. Advantageous embodiments of the present invention are described by the dependent claims.

### Brief Description of the Drawing

Figure 1 shows a power plant according to an embodiment of the present invention.
Figure 2 shows an arrangement according to an embodiment of the present invention.
Figure 3a and 3b show possible schematical ways of functioning of an arrangement according to different embodiments of the present invention.
Figure 4 shows, schematically, a method of power management according to an embodiment of the present invention.

### Detailed Description

The illustration in the drawing is schematic. It is noted that in different figures, similar or identical elements are provided with the same reference signs or with reference signs, which are different from the corresponding reference signs only within the first digit.

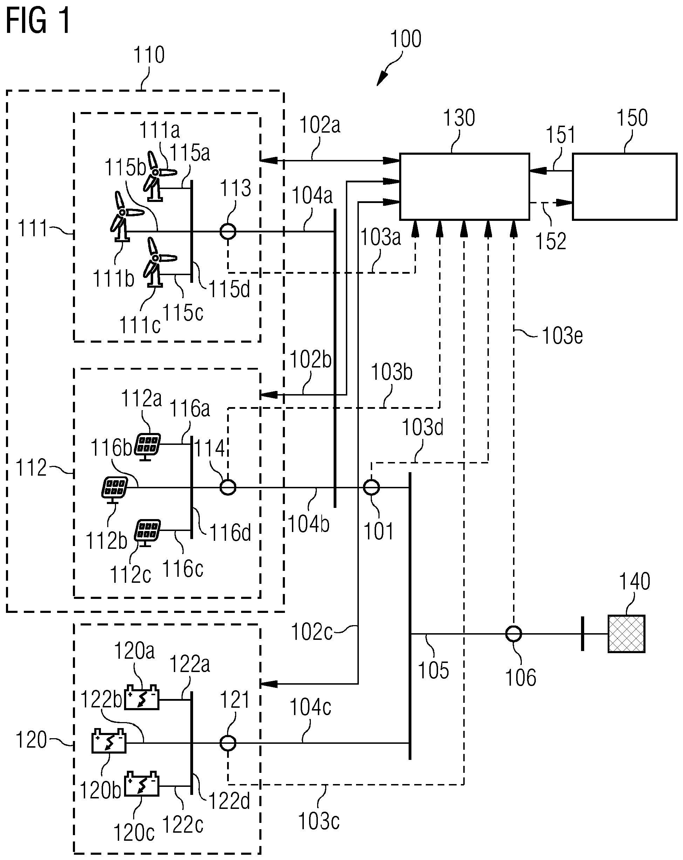

**Figure 1** shows a power plant 100 according to an embodiment of the present invention. The power plant 100 comprises renewable energy generation equipment 110, an energy storage system 120 and an arrangement 130 for managing the power plant 100. The power plant 100 is connected through at least one point of connection to an electrical grid or network 140.

In the present embodiment, the renewable energy generation equipment 110 is of two types: on the one side there are wind turbines 111a, 111b, 11bc forming a wind power plant 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind power point of connection 113, which electrically connects the wind turbines 111a, 111b, 111c to the power line 104a and through this to a first point of connection 101, so that the electrical energy produced in the wind power plant 111 can be distributed to the electrical grid 140 via a power line 105.

In a similar fashion, the solar panels 112a, 112b, 112c are electrically connected via power lines 116a, 116b, 116c respectively to a power line 116d and through the power line 116d to a solar power point of connection 114, which electrically connects the solar panels 112a, 112b, 112c to the power line 104b and through this to the first point of connection 101, so that the electrical energy produced in the solar energy park 112 can be distributed to the electrical grid 140 via the power line 105.

The energy storage system 120 includes a number of batteries 120a, 120b, 120c. These are electrically connected via power lines 122a, 122b, 122c to a power line 122d and through this to a second point of connection 121. The second point of connection 121 connects the energy storage system 120 with power line 104c, so that the electrical energy produced/absorbed by the energy storage system 120 can be injected/drawn to the electrical grid 140 via the power line 105.

The energy generated from the renewable power generation equipment 110 can supply power both to the electrical grid 140 and to the energy storage system 120, as determined by the controller signals from the arrangement 130.

The arrangement 130, which is described in detail in **Fig-ure 2**, controls via a feedback and regulation loop, represented by the lines 102a, 102b, 102c, the wind power plant 111, the solar energy park 112 and the energy storage system 120. In particular, each of these three components of the power plant 100 are separately controlled and regulated by the arrangement 130. In particular, the arrangement 130 is configured to regulate, connect or disconnect any of the wind turbines 111a, 111b, 111c and/or solar panels 112a, 112b, 112c. Besides the connection and disconnection of the power lines, the amount of power flow can be controlled by way of controlling, monitoring, measurement and alarm signals transmitted to each wind generation, solar generation and storage resource's controller, and its associated connection points.

If a wind turbine or a solar panel is connected, then it provides electrical power to be distributed to either the electrical grid 140 or the energy storage system 120. On the contrary, if a solar panel is disconnected, then it does not provide electrical power to either the electrical grid 140 or the energy storage system 120.

The arrangement 130 is also configured to regulate the power supply or completely connect or disconnect the whole wind power plant 111 and/or the whole solar energy park 112 by enabling or disabling the power distribution through the wind power point of connection 113 and/or through the solar power point of connection 114. To control the wind power point of connection 113 and the solar power point of connection 114, dedicated signal lines 103a and 103b are provided. These monitoring, command and control signals are sent to and received from each wind and solar generation resource's controller and point of connection.

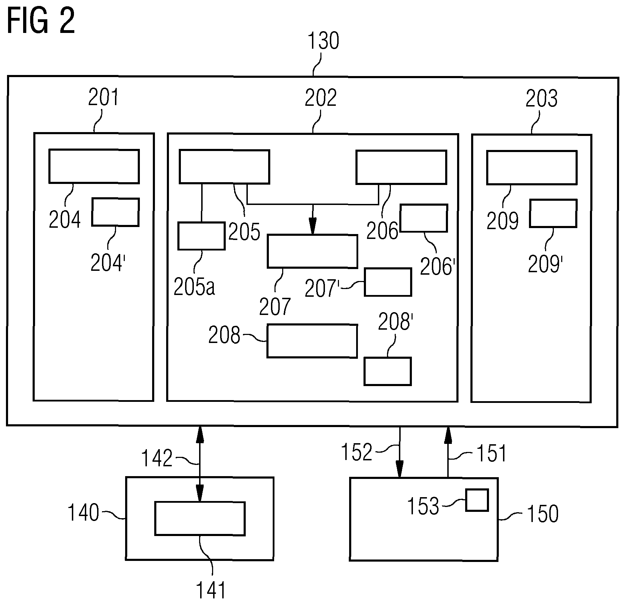

Furthermore, the arrangement 130 is configured to regulate the power flow, connect or disconnect the energy storage system 120. If the energy storage system 120 is connected, then the batteries 120a, 120b, 120c can either be charged or discharged, depending on an energy storage power schedule 206 (see **Figure 2****)** for controlling the second point of connection 121. The arrangement 130 controls the second point of connection 121 via a dedicated signal line 103c. It might also be the case that one or more batteries are connected and one or more are disconnected, so that the batteries 120a, 120b, 120c can be controlled separately by the arrangement 130. The second point of connection 121 is controlled to supply the required power to the electrical grid 140 according to an energy storage power schedule 206 (see **Figure 2****),** which is determined on the basis of forecasts parameters 204 (see **Fig-ure 2**), such as, for example, a specific power supply schedule (committed power schedule) 153 (see **Figure 2****)** requested by a unit 150 to the power plant 100 through a signal line 151 and confirmed by the power plant via a signal line 152.

By satisfying the request of the unit 150 only using available battery power, the power plant 100 is less prone to fail in meeting the power supply demanded as a consequence of mutable weather conditions, thus optimizing the financial operability of the hybrid power plant itself.

Also, the arrangement 130 is configured to control the first point of connection 101 via a dedicated signal line 103d. And the connection of the whole plant to the grid 140 via a power plant point of connection 106, which is controlled via a dedicated signal line 103e.

From **Figure 1****,** as well as from the following **Figure 2****,** it is clear, how the arrangement 130 controls the renewable power generation equipment 110 and the energy storage system 120 separately from each other in order to satisfy a certain power schedule, for which power and/or storing capacity of the batteries 120a, 120b and 120c has been committed or reserved, and to optimize the lifetime of the energy storage system 120 by avoiding unnecessary cycling and or power curtailment thanks to a state of charge target, which must be reached, and that has been calculated using an optimization algorithms within arrangement 130.

**Figure 2** shows the arrangement 130 in a detailed manner. The arrangement 130 comprises a forecast service system 201, an energy management system 202 and a local plant controller 203.

The forecast service system 201 retrieves forecasts parameters 204, such as weather forecast data, from sources which are external to the arrangement 130, such as forecast provider's inputs. The forecasts parameters 204 are then passed to the energy management system 202. The forecasts parameters can also comprise, for example, a committed power schedule 153, which has to be delivered to the market or a user 150. The committed power schedule 153 is transmitted to the arrangement 130 via a signal line 151 and accepted by the arrangement 130 via a signal line 152. A parameter can also be a committed power schedule received from a controller 141 of the electrical grid 140.

The energy management system 202 is configured to, on the basis of the forecasts parameters 204, to determine a power generation schedule 205 of the power plant 100 during a predefined time range and to determine an optimized energy storage power schedule 206 defining a discharge and/or absorbed power to/from the electrical grid 140 or from the generators in 110 by the energy storage system 120 during the predefined time range. The power generation schedule 205 can also take into consideration that not all of the components of the renewable power generation equipment 110 are switched on or connected during the predefined time range. This can for example be convenient, when peak powers are produced, due to extreme weather conditions, and it is more convenient to disconnect a wind turbine or a solar panel, rather than curtail the produced power.

Furthermore, the energy management system 202 also determines an optimized power injection schedule 207 of the power plant 100 during the predefined time range. The power injection schedule 207 is the sum of the power injected by the renewable power generation equipment 110 and the one defined by the energy storage power schedule 206. The difference between the power injection schedule 207 and the energy storage power schedule 206 defines a renewable power schedule 205a, which is the power generated by the renewable power generation equipment 110 and injected to the electrical grid 140. The power generated by the renewable power generation equipment 110 and not injected into the electrical grid 140 is supplied to the energy storage system 120 to be recharged, or it is curtailed if unavoidable, for example when the storage is full or it has reached a maximum desirable state of charge.

The energy management system 202 must be configured to determine, starting from the power injection schedule 207 and the energy storage power schedule 206, the renewable power schedule 205a.

The energy management system also determines an optimized state of charge target schedule 208 representing a charge level of the energy storage system 120 to be achieved during the predefined time range. The state of charge target schedule 208 is determined of the base of the forecasts parameters 204 and is aimed at optimizing the lifetime of the energy storage system 120 and the minimization of the energy curtailment from the generation resources 110.

The energy storage power schedule 206, the power injection schedule 207 and the state of charge target schedule 208 are optimized in view of the forecasts parameters, with the objective of maximizing or optimizing at least one aspect of the power plant 100, such as the lifetime of the energy storage system 120, the financial profitability of the plant or the power curtailment.

The energy management system 202 then transmits the energy storage power schedule 206, the power injection schedule 207 the state of charge target schedule 208 and, if the renewable power schedule 205a is determined by the energy management system 202, also the renewable power schedule 205a to the local plant controller 203. The real time references and signals are determined by the local plant controller 203 on the basis of the power injection schedule 207 and the energy storage power schedule 206.

The local plant controller 203 saves the renewable power schedule 205a, the energy storage power schedule 206 and the state of charge target schedule 208 as EMS schedules 209.

During the predefined time range, the local plant controller 203 is configured to supply and/or absorb power from the energy storage system 120 to/from the second point of connection 121 according to the energy storage power schedule 206 and to control the power supplied by the renewable power generation equipment 110 through the points of connection 113, 114 and/or to the energy storage system 120 on the basis of the renewable power schedule 205a, and thus on the basis of the power injection schedule 207, and the state of charge target schedule 208.

The energy management system 202 can also be configured to retrieve, during the predefined time range, updated forecasts parameters 204' from the forecast service system 201. On the basis of the updated forecasts parameters 204', the energy management system can update the power generation schedule 205, the energy storage power schedule 206, the power injection schedule 207 and the state of charge target schedule 208. The updated energy storage power schedule 206', the updated power injection schedule 207' and the updated state of charge target schedule 208' are transmitted to the local plant controller 203 as updated energy management system schedules 209', which uses them to update the controlling of the power plant 100 by taking into consideration changed external conditions influencing the power generation and/or supply and/or absorption. In this way, mutable weather and/or economic conditions might be taken into account and might be used for optimizing the lifetime of the energy storage system 120.

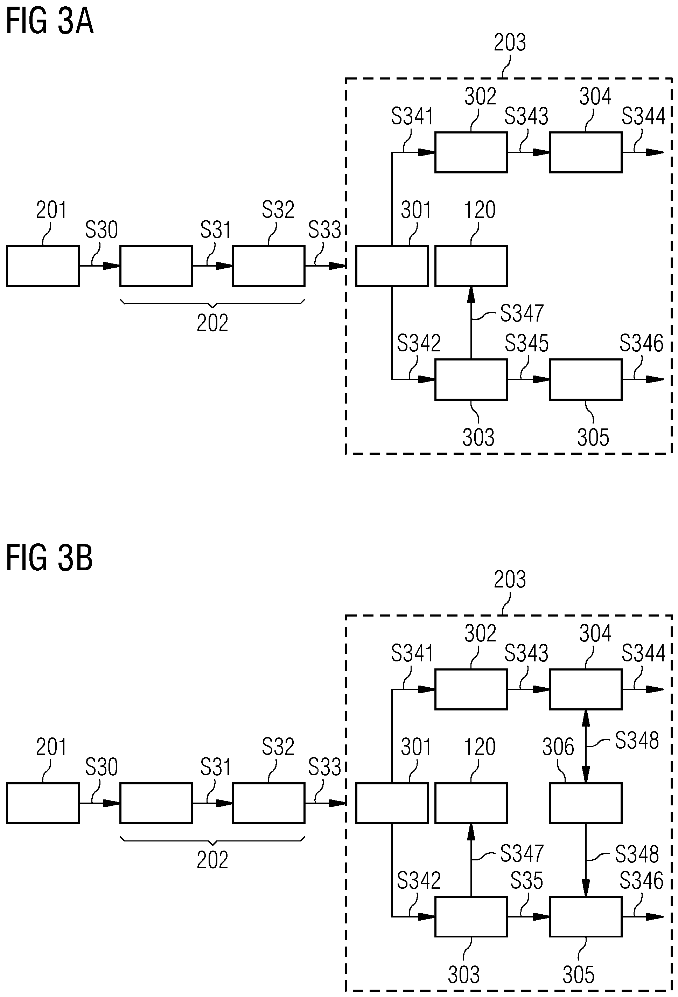

**Figure 3a** and **3b** show passible, schematical ways of functioning of the arrangement 130.

In **Figure 3a** the forecast service system 201 provides forecasts parameters 204 to the energy management system 202 (step S30). The forecasts parameters 204 can be directed towards the optimization of the generated power and/or the lifetime of the energy storage system 120 on the basis of weather forecast parameters (natural forecast), a price forecast for the energy price (energy arbitrage) or a state of charge objective (time shifting) of the energy storage system 120. The energy management system 202 generates a power generation schedule 205, determines an energy storage power schedule 206 and a state of charge target schedule 208 on the basis of the forecasts parameters 204 (step S31). A power injection schedule 207 is determined on the basis of the power generation schedule 205 and the energy storage power schedule 206 and a renewable power schedule 205a is determined on the basis of the power injection schedule 207 and the energy storage power schedule 206 (step S32). The energy storage power schedule 206, the power injection schedule 207 and the state of charge target schedule 208 are optimized in view of the forecasts parameters, with the objective of maximizing or optimizing at least one aspect of the power plant 100, such as the lifetime of the energy storage system 120, the financial profitability of the plant or the power curtailment.

The energy storage power schedule 206, the power injection schedule 207 and the state of charge target schedule 208 are sent to the local plant controller 203 (step S33). The local plant controller 203 has a main controlling unit 301, configured to control an energy storage power injection unit 302 and a renewable power injection unit 303. In step S341 the main controlling unit 301 sends to the energy storage power injection unit 302 the real time reference setpoint signals for controlling the injection and/or absorption of the power to/from the electrical grid 140 or the generation units 110 by means of a first grid power regulation unit 304 (step S343) through the second point of connection 121 (step S344). In step S342 the main controlling unit 301 sends to the renewable power injection unit 303 the renewable power real time reference setpoint signals for controlling the injection of the power to the electrical grid 140 by means of a second grid power regulation unit 305 (step S345) to the first point of connection 101 (step S346). Furthermore, in step S347 the renewable power injection unit 303 supplies power to the energy storage system 120.

According to **Figure 3b****,** a generation support unit 306 is provided in the local plant controller. The generation support unit 306 receives signals from a controller 141 of the grid 140. In this case, the generation support unit 306 communicates with both grid power regulation units 304, 305 any variations that might be required for grid power regulation such as power limiting, power curtailment, power frequency control (step S348). If this is the case, the power generation unit 306 allows a certain flexibility in managing the variation, as the renewable power generation equipment 110 and the energy storage system 120 support each other in terms of achieving the power injection variations dictated by the controller 141 of the grid 140, so that a lesser amount of power is curtailed and the state of charge target schedule 208 can still be achieved, thus enhancing the lifetime of the battery.

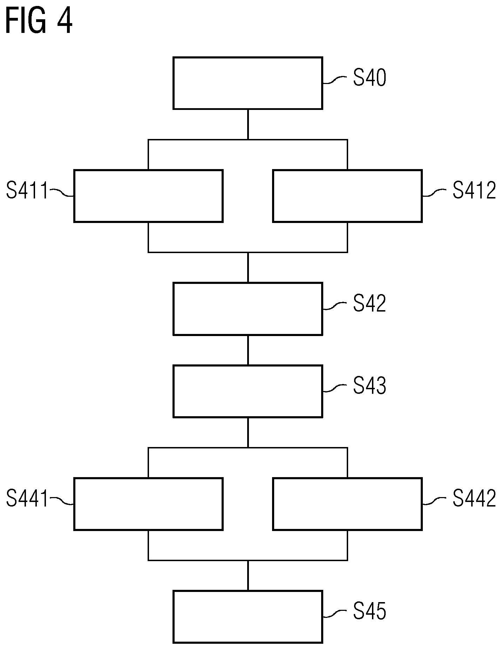

**Figure 4** shows, schematically, a method of power management of the power plant 100 according to the invention.

In a first step S40 forecasts parameters 204 are collected from the forecast service system 201.

The forecasts parameters 204 can be of different types. It is for example possible, that the forecasts parameters 204 are weather forecasts data for the region in which the power plant 100 is situated. For example, the forecasts parameter 204 can relate to wind speed, wind direction, precipitations and/or solar irradiation. If the renewable energy generation equipment 110 comprises a system for harvesting tidal energy, the forecasts parameters 204 can also provide information about the tides.

The forecasts parameters 204 can however also relate to financial data, such as the energy price, and/or to parameters providing information about the energy market, such as a requested power supply or a power injection schedule, that the operator of the power plant 100 committed to a controller of the grid 140.

Also, the forecasts parameters 204 can provide information about the power plant 100. In particular, the forecasts parameters 204 can relate to a desired state of charge of the energy storage system 120 to be achieved or maintained and/or to the availability of one or more parts of the renewable energy generation equipment 110.

The forecasts parameters 204 can relate to a present time range. It is however preferable, that the forecasts parameters 204 relate to information during the predefined time range.

In a second step S411, the energy management system 202 determines a power generation schedule 205 on the basis of the forecasts parameters 204 for the predefined time range. At the same time, in a parallel step S412, an optimized energy storage power schedule 206 is determined on the basis of the forecasts parameters, with the aim of minimizing storage usage and energy curtailment.

According to an embodiment, the energy storage power schedule 206 is determined on the basis of a committed power schedule 153, that the arrangement 130 offered to a user 150.

In a third step S42, the energy management system 202 determines an optimized power injection schedule 207 on the basis of the power generation schedule 205 and on the basis of the energy storage power schedule 206.

In a further step S43, the energy management system 202 also determines an optimized state of charge target schedule 208 on the basis of the forecasts parameter 204 for the predefined time range.

In an embodiment, the state of charge target schedule 208 is determined on the basis of both the forecasts parameters 204 and of the power injection schedule 207.

The state of charge target schedule 208 determined in step S43 can be a constant value for the whole predefined time range, for example a certain amount of the state of charge of the energy storage system 120 that has to be maintained. It can also be the case, that the state of charge target schedule 208 is a range having a minimum and a maximum value. In this case, the method allows the charge level of the energy storage system 120 to move within certain boundaries.

It could also be the case, that the state of charge target schedule 208 is not a constant value over the predefined time range, but rather a variable one. In this case, the method takes into account variable conditions, which determine a variable output of the renewable energy generation equipment 110, such as variable weather conditions and/or variable energy prices. It can, for example, be the case that the state of charge target schedule 208 is a declining value of the state of charge during a first time period of the predefined time range and a rising value in a second time period, which comes after the first one, of the predefined time range.

The energy storage power schedule 206, the power injection schedule 207 and the state of charge target schedule208 are optimized in view of the forecasts parameters, with the objective of maximizing or optimizing at least one aspect of the power plant 100, such as the lifetime of the energy storage system 120, the financial profitability of the plant or the power curtailment.

In a fifth step, the energy storage power schedule 206, the power injection schedule 207 and the state of charge target schedule 208 are used by the local plant controller 203. The local plant controller 203 supplies the power from the energy storage system 120 to the second point of connection 121 according to the energy storage power schedule 206 (step S441) and controls the supply of the generated power from the renewable power generation equipment 110 to the first point of connection 101 and/or to the energy storage system 120 according to the power injection schedule 207 and the state of charge target schedule 208 (step S442).

According to an embodiment of the invention, during the predefined time period, updated forecasts parameters 204' are collected by the forecast service system 201 and are elaborated by the energy management system 202 to update power generation schedule 205, the energy storage power schedule 206, the power injection schedule 207 and the state of charge target schedule 208.

In this case, the steps S40 to S442 are repeated.

The updated forecasts parameters 204' can be provided at regular or irregular time intervals during the predefined time range.

According to **Figure 4****,** the method has a feedback and regulating step S45, in which a present value of the state of charge is measured and compared with the state of charge target schedule 208. If necessary, the composition of the supplied power from the renewable power generation equipment 110 is regulated on the basis of the result of the comparison.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method of power management of a power plant (100) comprising at least one type of renewable power generation equipment (110) and an energy storage system (120), wherein the power plant (100) comprises a first point of connection (101) connecting the renewable power generation equipment (110) with an electrical grid (140) and a second point of connection (121) connecting the energy storage system (120) with the electrical grid (140), the method comprising:
determining a power generation schedule (205) defining a power generation of the renewable power generation equipment (110) of the power plant (100) during a predefined time range on the basis of forecasts parameters (204);
determining an optimized energy storage power schedule (206) defining a discharged and/or absorbed power to/from the electrical grid (140) or from the power generation equipment (110) by the energy storage system (120) during the predefined time range on the basis of the forecasts parameters (204);
determining an optimized power injection schedule (207) of the power plant (100) defining a power supply to the electrical grid (100) during the predefined time range on the basis of the power generation schedule (205) and on the basis of the energy storage power schedule (206);
determining an optimized state of charge target schedule (208) of the energy storage system (120) during the predefined time range on the basis of the forecasts parameters (204);
wherein in the predefined time range the method comprises:
supplying and/or absorbing the power from the energy storage system (120) to/from the second point of connection (121) according to the energy storage power schedule (206);
controlling the power supply of the power plant (100) from the renewable energy generation equipment (110) to the first point of connection (101) and/or to the energy storage system (120) on the basis of the power injection schedule (207) and the state of charge target schedule (208),
further **characterized by**
during the predefined time range the method further comprises:
modifying the energy storage power schedule (206) and the power injection schedule (207) on the basis of generation support parameters.

2. Method according to claim 1, wherein the first and the second point of connection (101, 121) coincide.

3. Method according to any of the preceding claims, wherein the at least one type of renewable power generation equipment (110) comprises at least one wind turbine (111a, 111b, 111c) and/or at least a solar panel (112a, 112b, 112c).

4. Method according to any of the preceding claims, wherein the forecasts parameters (204) comprise weather forecast parameters, in particular wind speed, wind direction and/or sun irradiation in the region of the power plant (100).

5. Method according to any of the preceding claims, wherein the forecasts parameters (204) comprise financial parameters and/or a committed power injection schedule.

6. Method according to any of the preceding claims, wherein the forecasts parameters (204) comprise a present availability of the renewable power generation equipment (110) and/or a desired state of charge to be achieved or maintained by the energy storage system (120).

7. Method according to any of the preceding claims, wherein, during the predefined time range, the method further comprises:
updating the power generation schedule (205), energy storage power schedule (206), the power injection schedule (207) and the state of charge target schedule (208) on the basis of updated forecasts parameters (204') collected during the predefined time range.

8. Method according to claim 7, wherein the updating is performed at regular or irregular time intervals.

9. Method according to any of the preceding claims, wherein the state of charge target schedule (208) is a constant value in time.

10. Method according to any of the preceding claims, wherein the state of charge target schedule (208) is a battery level range of the energy storage system (120) to be achieved.

11. Method according to any of the preceding claims, wherein in the predefined time range the method further comprises:
measuring a current value of the state of charge of the energy storage system;
comparing the current value of the state of charge with the scheduled state of charge target schedule (208);
controlling the power supply of the power plant (100) from the renewable energy generation equipment (110) to the first point of connection (101) and/or to the energy storage system (120) on the basis of the comparison between the current value of the state of charge and the state of charge target schedule (208).

12. Method according to any of the preceding claims, wherein, during the predefined time range, the method further comprises:
activating and/or deactivating at least a part of the renewable power generating equipment (110).

13. Arrangement (130) for managing a power plant (100), including renewable power generation equipment (110), an energy storage system (120), a first point of connection (101) connecting the renewable power generation equipment (110) with an electrical grid (140) and a second point of connection (121) connecting the energy storage system (120) with the electrical grid (140), the arrangement (130) comprising:
an energy management system (202), based on optimization algorithms oriented toward the minimization of the storage usage and the minimization of the energy curtailment, by determining firm and predictable power schedules, configured to:
generate a power generation schedule (205) defining a power generation of the renewable power generation equipment (110) during a predefined time range on the basis of forecasts parameters (204);
determine an optimized energy storage power schedule (206) defining a discharged and/or absorbed power to/from the electrical grid (140) by the energy storage system (120) during the predefined time range on the basis of the forecasts parameters (204);
determine an optimized power injection schedule (207) of the power plant (100) defining a power supply to the electrical grid (140) during the predefined time range on the basis of the power generation schedule (205) and on the basis of the energy storage power schedule (206); and
determine an optimized state of charge target schedule (208) of the energy storage system (120) during the predefined time range on the basis of the forecasts parameters (204);
a local plant controller (203) configured to:
supply and/or absorb the power from the energy storage system (120) to/from the second point of connection (121) according to the energy storage power schedule (206);
control the power supply of the power plant (100) from the renewable energy generation equipment (110) to the first point of connection (101) and/or to the energy storage system (120) on the basis of the power injection schedule (207) and the state of charge target schedule (208);
during the predefined time range,
**characterized in that**
the local plant controller (203) further comprises a generation support unit (306) configured to receive, from a controller (141) of the grid (140), signals for modifying the energy storage power schedule (206) and the power injection schedule (207).

14. Power plant (100) comprising at least an arrangement (130) according to claim 13.

## Patentansprüche

1. Verfahren zur Leistungsverwaltung eines Kraftwerks (100), umfassend mindestens eine Art von Ausrüstung (110) zur Erzeugung von erneuerbarer Leistung und ein Energiespeichersystem (120), wobei das Kraftwerk (100) einen ersten Verbindungspunkt (101), der die Ausrüstung (110) zur Erzeugung von erneuerbarer Leistung mit einem Stromnetz (140) verbindet, und einen zweiten Verbindungspunkt (121), der das Energiespeichersystem (120) mit dem Stromnetz (140) verbindet, umfasst, wobei das Verfahren Folgendes umfasst:
Bestimmen eines Leistungserzeugungsplans (205), der eine Leistungserzeugung der Ausrüstung (110) zur Erzeugung von erneuerbarer Leistung des Kraftwerks (100) während eines vordefinierten Zeitbereichs auf der Grundlage von Vorhersageparametern (204) definiert;
Bestimmen eines optimierten Energiespeicherleistungsplans (206), der eine abgegebene und/oder absorbierte Leistung an/von dem Stromnetz (140) oder von der Ausrüstung (110) zur Leistungserzeugung durch das Energiespeichersystem (120) während des vordefinierten Zeitbereichs auf der Grundlage der Vorhersageparameter (204) definiert;
Bestimmen eines optimierten Leistungseinspeiseplans (207) des Kraftwerks (100), der eine Leistungsbereitstellung an das Stromnetz (100) während des vordefinierten Zeitbereichs auf der Grundlage des Leistungserzeugungsplans (205) und auf der Grundlage des Energiespeicherleistungsplans (206) definiert;
Bestimmen eines optimierten Ladezustandszielplans (208) des Energiespeichersystems (120) während des vordefinierten Zeitbereichs auf der Grundlage der Vorhersageparameter (204);
wobei das Verfahren in dem vordefinierten Zeitbereich Folgendes umfasst: Bereitstellen und/oder Absorbieren der Leistung von dem Energiespeichersystem (120) an/von dem zweiten Verbindungspunkt (121) gemäß dem Energiespeicherleistungsplan (206) ;
Steuern der Leistungsbereitstellung des Kraftwerks (100) von der Ausrüstung (110) zur Erzeugung von erneuerbarer Energie an den ersten Verbindungspunkt (101) und/oder an das Energiespeichersystem (120) auf der Grundlage des Leistungseinspeiseplans (207) und des Ladezustandszielplans (208),
ferner **dadurch gekennzeichnet, dass**
das Verfahren während des vordefinierten Zeitbereichs ferner Folgendes umfasst:
Modifizieren des Energiespeicherleistungsplans (206) und des Leistungseinspeiseplans (207) auf der Grundlage von Erzeugungsunterstützungsparametern.

2. Verfahren nach Anspruch 1, wobei der erste und der zweite Verbindungspunkt (101, 121) zusammenfallen.

3. Verfahren nach einem der vorhergehenden Ansprüche, wobei die mindestens eine Art von Ausrüstung (110) zur Erzeugung von erneuerbarer Leistung mindestens eine Windturbine (111a, 111b, 111c) und/oder mindestens ein Solarpaneel (112a, 112b, 112c) umfasst.

4. Verfahren nach einem der vorhergehenden Ansprüche, wobei die Vorhersageparameter (204) Wettervorhersageparameter, insbesondere Windgeschwindigkeit, Windrichtung und/oder Sonneneinstrahlung in der Region des Kraftwerks (100) umfassen.

5. Verfahren nach einem der vorhergehenden Ansprüche, wobei die Vorhersageparameter (204) finanzielle Parameter und/oder einen festgelegten Leistungseinspeiseplan umfassen.

6. Verfahren nach einem der vorhergehenden Ansprüche, wobei die Vorhersageparameter (204) eine derzeitige Verfügbarkeit der Ausrüstung (110) zur Erzeugung von erneuerbarer Leistung und/oder einen gewünschten Ladezustand, der durch das Energiespeichersystem (120) zu erreichen oder aufrechtzuerhalten ist, umfassen.

7. Verfahren nach einem der vorhergehenden Ansprüche, wobei das Verfahren während des vordefinierten Zeitbereichs ferner Folgendes umfasst:
Aktualisieren des Leistungserzeugungsplans (205), des Energiespeicherleistungsplans (206), des Leistungseinspeiseplans (207) und des Ladezustandszielplans (208) auf der Grundlage von aktualisierten Vorhersageparametern (204'), die während des vordefinierten Zeitbereichs gesammelt werden.

8. Verfahren nach Anspruch 7, wobei das Aktualisieren in regelmäßigen oder unregelmäßigen Zeitintervallen durchgeführt wird.

9. Verfahren nach einem der vorhergehenden Ansprüche, wobei der Ladezustandszielplan (208) ein zeitlich konstanter Wert ist.

10. Verfahren nach einem der vorhergehenden Ansprüche, wobei der Ladezustandszielplan (208) ein zu erreichender Batteriestandsbereich des Energiespeichersystems (120) ist.

11. Verfahren nach einem der vorhergehenden Ansprüche, wobei das Verfahren in dem vordefinierten Zeitbereich ferner Folgendes umfasst: Messen eines aktuellen Werts des Ladezustands des Energiespeichersystems;
Vergleichen des aktuellen Werts des Ladezustands mit dem geplanten Ladezustandszielplan (208);
Steuern der Leistungsbereitstellung des Kraftwerks (100) von der Ausrüstung (110) zur Erzeugung von erneuerbarer Energie an den ersten Verbindungspunkt (101) und/oder an das Energiespeichersystem (120) auf der Grundlage des Vergleichs zwischen dem aktuellen Wert des Ladezustands und dem Ladezustandszielplan (208).

12. Verfahren nach einem der vorhergehenden Ansprüche, wobei das Verfahren während des vordefinierten Zeitbereichs ferner Folgendes umfasst:
Aktivieren und/oder Deaktivieren mindestens eines Teils der Ausrüstung (110) zum Erzeugen von erneuerbarer Leistung.

13. Anordnung (130) zum Verwalten eines Kraftwerks (100), beinhaltend eine Ausrüstung (110) zur Erzeugung von erneuerbarer Leistung, ein Energiespeichersystem (120), einen ersten Verbindungspunkt (101), der die Ausrüstung (110) zur Erzeugung von erneuerbarer Leistung mit einem Stromnetz (140) verbindet, und einen zweiten Verbindungspunkt (121), der das Energiespeichersystem (120) mit dem Stromnetz (140) verbindet, wobei die Anordnung (130) Folgendes umfasst:
ein Energieverwaltungssystem (202), das auf Optimierungsalgorithmen basiert, die in Richtung der Minimierung der Speicherverwendung und der Minimierung der Energieeinschränkung ausgerichtet sind, durch Bestimmen fester und vorhersehbarer Leistungspläne, das zu Folgendem konfiguriert ist:
Erzeugen eines Leistungserzeugungsplans (205), der eine Leistungserzeugung der Ausrüstung (110) zur Erzeugung von erneuerbarer Leistung während eines vordefinierten Zeitbereichs auf der Grundlage von Vorhersageparametern (204) definiert;
Bestimmen eines optimierten Energiespeicherleistungsplans (206), der eine abgegebene und/oder absorbierte Leistung an/von dem Stromnetz (140) durch das Energiespeichersystem (120) während des vordefinierten Zeitbereichs auf der Grundlage der Vorhersageparameter (204) definiert;
Bestimmen eines optimierten Leistungseinspeiseplans (207) des Kraftwerks (100), der eine Leistungsbereitstellung an das Stromnetz (140) während des vordefinierten Zeitbereichs auf der Grundlage des Leistungserzeugungsplans (205) und auf der Grundlage des Energiespeicherleistungsplans (206) definiert; und
Bestimmen eines optimierten Ladezustandszielplans (208) des Energiespeichersystems (120) während des vordefinierten Zeitbereichs auf der Grundlage der Vorhersageparameter (204);
eine lokale Kraftwerkssteuerung (203), die zu Folgendem konfiguriert ist:
Bereitstellen und/oder Absorbieren der Leistung von dem Energiespeichersystem (120) an/von dem zweiten Verbindungspunkt (121) gemäß dem Energiespeicherleistungsplan (206);
Steuern der Leistungsbereitstellung des Kraftwerks (100) von der Ausrüstung (110) zur Erzeugung von erneuerbarer Energie an den ersten Verbindungspunkt (101) und/oder an das Energiespeichersystem (120) auf der Grundlage des Leistungseinspeiseplans (207) und des Ladezustandszielplans (208);
während des vordefinierten Zeitbereichs,
**dadurch gekennzeichnet, dass**
die lokale Kraftwerkssteuerung (203) ferner eine Erzeugungsunterstützungseinheit (306) umfasst, die dazu konfiguriert ist, von einer Steuerung (141) des Netzes (140) Signale zum Modifizieren des Energiespeicherleistungsplans (206) und des Leistungseinspeiseplans (207) zu empfangen.

14. Kraftwerk (100), umfassend mindestens eine Anordnung (130) nach Anspruch 13.

## Revendications

1. Procédé de gestion de puissance d'une centrale électrique (100) comprenant au moins un type d'équipement de production d'énergie renouvelable (110) et un système de stockage d'énergie (120), dans lequel la centrale électrique (100) comprend un premier point de connexion (101) connectant l'équipement de production d'énergie renouvelable (110) avec un réseau électrique (140) et un second point de connexion (121) connectant le système de stockage d'énergie (120) avec le réseau électrique (140), le procédé comprenant :
la détermination d'un programme de production de puissance (205) définissant une production de puissance de l'équipement de production d'énergie renouvelable (110) de la centrale électrique (100) pendant une plage temporelle prédéfinie sur la base de paramètres de prévisions (204) ;
la détermination d'un programme de puissance de stockage d'énergie optimisé (206) définissant une puissance déchargée et/ou absorbée vers/provenant du réseau électrique (140) ou provenant de l'équipement de production d'énergie (110) par le système de stockage d'énergie (120) pendant la plage temporelle prédéfinie sur la base des paramètres de prévisions (204) ;
la détermination d'un programme d'injection de puissance optimisé (207) de la centrale électrique (100) définissant une alimentation électrique vers le réseau électrique (100) pendant la plage temporelle prédéfinie sur la base du programme de production de puissance (205) et sur la base du programme de puissance de stockage d'énergie (206) ;
la détermination d'un programme cible d'état de charge optimisé (208) du système de stockage d'énergie (120) pendant la plage temporelle prédéfinie sur la base des paramètres de prévisions (204) ;
dans lequel, dans la plage temporelle prédéfinie, le procédé comprend : la fourniture et/ou l'absorption de la puissance provenant du système de stockage d'énergie (120) vers/provenant du second point de connexion (121) selon le programme de puissance de stockage d'énergie (206) ;
la commande de l'alimentation électrique de la centrale électrique (100) provenant de l'équipement de production d'énergie renouvelable (110) vers le premier point de connexion (101) et/ou vers le système de stockage d'énergie (120) sur la base du programme d'injection de puissance (207) et du programme cible d'état de charge (208),
**caractérisé en outre en ce que**
pendant la plage temporelle prédéfinie, le procédé comprend en outre :
la modification du programme de puissance de stockage d'énergie (206) et du programme d'injection de puissance (207) sur la base de paramètres de support de production.

2. Procédé selon la revendication 1, dans lequel le premier et le second point de connexion (101, 121) coïncident.

3. Procédé selon l'une quelconque des revendications précédentes, dans lequel l'au moins un type d'équipement de production d'énergie renouvelable (110) comprend au moins une éolienne (111a, 111b, 111c) et/ou au moins un panneau solaire (112a, 112b, 112c).

4. Procédé selon l'une quelconque des revendications précédentes, dans lequel les paramètres de prévisions (204) comprennent des paramètres de prévisions météorologiques, en particulier la vitesse du vent, la direction du vent et/ou l'irradiation solaire dans la région de la centrale électrique (100).

5. Procédé selon l'une quelconque des revendications précédentes, dans lequel les paramètres de prévisions (204) comprennent des paramètres financiers et/ou un programme d'injection de puissance engagé.

6. Procédé selon l'une quelconque des revendications précédentes, dans lequel les paramètres de prévisions (204) comprennent une disponibilité actuelle de l'équipement de production d'énergie renouvelable (110) et/ou un état de charge souhaité devant être atteint ou maintenu par le système de stockage d'énergie (120).

7. Procédé selon l'une quelconque des revendications précédentes, dans lequel, pendant la plage temporelle prédéfinie, le procédé comprend en outre :
la mise à jour du programme de production de puissance (205), du programme de puissance de stockage d'énergie (206), du programme d'injection de puissance (207) et du programme cible d'état de charge (208) sur la base de paramètres de prévisions mis à jour (204') collectés pendant la plage temporelle prédéfinie.

8. Procédé selon la revendication 7, dans lequel la mise à jour est réalisée à intervalles de temps réguliers ou irréguliers.

9. Procédé selon l'une quelconque des revendications précédentes, dans lequel le programme cible d'état de charge (208) est une valeur constante dans le temps.

10. Procédé selon l'une quelconque des revendications précédentes, dans lequel le programme cible d'état de charge (208) est une plage de niveau de batterie du système de stockage d'énergie (120) devant être atteinte.

11. Procédé selon l'une quelconque des revendications précédentes, dans lequel, dans la plage temporelle prédéfinie, le procédé comprend en outre : la mesure d'une valeur actuelle de l'état de charge du système de stockage d'énergie ;
la comparaison de la valeur actuelle de l'état de charge avec le programme cible d'état de charge (208) programmé ;
la commande de l'alimentation électrique de la centrale électrique (100) provenant de l'équipement de production d'énergie renouvelable (110) vers le premier point de connexion (101) et/ou vers le système de stockage d'énergie (120) sur la base de la comparaison entre la valeur actuelle de l'état de charge et le programme cible d'état de charge (208).

12. Procédé selon l'une quelconque des revendications précédentes, dans lequel, pendant la plage temporelle prédéfinie, le procédé comprend en outre :
l'activation et/ou la désactivation d'au moins une partie de l'équipement de production d'énergie renouvelable (110).

13. Agencement (130) pour la gestion d'une centrale électrique (100), incluant un équipement de production d'énergie renouvelable (110), un système de stockage d'énergie (120), un premier point de connexion (101) connectant l'équipement de production d'énergie renouvelable (110) avec un réseau électrique (140) et un second point de connexion (121) connectant le système de stockage d'énergie (120) avec le réseau électrique (140), l'agencement (130) comprenant :
un système de gestion d'énergie (202), basé sur des algorithmes d'optimisation orientés vers la minimisation de l'utilisation du stockage et la minimisation de l'écrêtement d'énergie, en déterminant des programmes de puissance fermes et prévisibles, configuré pour :
générer un programme de production de puissance (205) définissant une production de puissance de l'équipement de production d'énergie renouvelable (110) pendant une plage temporelle prédéfinie sur la base de paramètres de prévisions (204) ;
déterminer un programme de puissance de stockage d'énergie optimisé (206) définissant une puissance déchargée et/ou absorbée vers/provenant du réseau électrique (140) par le système de stockage d'énergie (120) pendant la plage temporelle prédéfinie sur la base des paramètres de prévisions (204) ;
déterminer un programme d'injection de puissance optimisé (207) de la centrale électrique (100) définissant une alimentation électrique vers le réseau électrique (140) pendant la plage temporelle prédéfinie sur la base du programme de production de puissance (205) et sur la base du programme de puissance de stockage d'énergie (206) ; et
déterminer un programme cible d'état de charge optimisé (208) du système de stockage d'énergie (120) pendant la plage temporelle prédéfinie sur la base des paramètres de prévisions (204) ;
un contrôleur de centrale local (203) configuré pour :
fournir et/ou absorber la puissance provenant du système de stockage d'énergie (120) vers/provenant du second point de connexion (121) selon le programme de puissance de stockage d'énergie (206) ;
commander l'alimentation électrique de la centrale électrique (100) provenant de l'équipement de production d'énergie renouvelable (110) vers le premier point de connexion (101) et/ou vers le système de stockage d'énergie (120) sur la base du programme d'injection de puissance (207) et du programme cible d'état de charge (208) ;
pendant la plage temporelle prédéfinie,
**caractérisé en ce que**
le contrôleur de centrale local (203) comprend en outre une unité de support de production (306) configurée pour recevoir, provenant d'un contrôleur (141) du réseau (140), des signaux pour modifier le programme de puissance de stockage d'énergie (206) et le programme d'injection de puissance (207).

14. Centrale électrique (100) comprenant au moins un agencement (130) selon la revendication 13.
